Europäisches Patentamt

European Patent Office

Office européen des brevets

(11) Publication number: **0 229 184 B1**

# EUROPEAN PATENT SPECIFICATION

(45) Date of publication of patent specification: **16.09.92**

(51) Int. Cl.⁵: **A61J 1/00**, A61M 5/00, B29D 22/00

(21) Application number: **86903599.8**

(22) Date of filing: **13.06.86**

(86) International application number:
**PCT/JP86/00298**

(87) International publication number:
**WO 86/07254 (18.12.86 86/27)**

(54) **MEDICAL LIOUID CONTAINER AND METHOD OF MANUFACTURING SAME.**

(30) Priority: **14.06.85 JP 129563/85**
**02.07.85 JP 145176/85**
**03.07.85 JP 146125/85**
**18.10.85 JP 232785/85**
**18.10.85 JP 232786/85**

(43) Date of publication of application:
**22.07.87 Bulletin 87/30**

(45) Publication of the grant of the patent:
**16.09.92 Bulletin 92/38**

(84) Designated Contracting States:
**AT BE CH DE FR GB IT LI LU NL SE**

(56) References cited:
**EP-A- 0 114 964       FR-A- 2 233 245**
**GB-A- 2 066 210       JP-A- 5 213 975**
**JP-A- 5 695 050       JP-A-58 109 064**
**JP-U- 5 979 138       US-A- 4 244 409**

(73) Proprietor: **MATERIAL ENGINEERING TECH-
NOLOGY LABORATORY, INC.
21-13, Ohhara 2-chome
Setagaya-ku, Tokyo 156(JP)**

(72) Inventor: **YAMAKOSHI, Kenichi 1-2-408
Maruyamanishichou 1-ch
Chuoh-ku Sapporo-shi
Hokkaido 064(JP)**

(74) Representative: **Sajda, Wolf E., Dipl.-Phys. et
al
MEISSNER, BOLTE & PARTNER Widenmayer-
strasse 48 Postfach 86 06 24
W-8000 München 86(DE)**

EP 0 229 184 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The invention relates to a flexible collapsible container for medical solutions, composed of flexible, inert organic polymer material, comprising a hollow body portion the outer edges of which are connected with each other, a hanger portion at the tail end of the body portion, a shoulder portion and a port portion at the top end of the body portion, wherein the body portion, the shoulder portion and the port portion of the container are integrally formed in a bottle-type bag configuration by blow molding.

The invention also relates to a method of making a flexible collapsible container for medical solutions, composed of flexible, inert organic polymer material, comprising a hollow body portion the outer edges of which are connected with each other, a hanger portion at the tail end of the body portion, and a port portion at the top end of the container, wherein the organic polymer material is blow molded into a bottle-type integral bag configuration including a port portion, a shoulder portion and a main body portion having round side peripheral portions and a round tail end peripheral portion.

Such a container and a method of making the container are known from GB-A-2 066 210. In this prior art container, two tubular ports are provided side by side at the top end of the body portion wherein septums are inserted into these ports. Such a structure provides a considerable stiffness to the container so that it is difficult to drain easily and completely the solution contained in such a container.

Another medical solution container is known from EP-A-0 114 964 wherein the top end of the body portion is formed by a port end member which receives and holds first and second port assemblies. Since the port end member is H-shaped in cross-section with a planar base portion receiving and holding the port assemblies, the structure has a bulky configuration. Also, the opposite film sheets forming the container proper cannot definitely come into contact in the region of the port end member so that it is difficult to drain completely and easily all the medical solution contained in such a vessel.

A closed system has been recently used in medicine, such as infusion therapy, to prevent a contained solution from coming into contact with the atmosphere. The configuration and the materials of a container for medical solutions to be used in a closed injection system must be chosen so that the container is soft enough to allow the contained solution to drain out using the force of gravity. This kind of solution container must also be able to withstand the heat of the autoclave sterilization of the contained solution.

Further, such a container is preferably made of transparent material so that the level of the solution can be checked easily and particle matter can be inspected from the outside. In order to obtain these objectives, soft polyvinyl chloride or ethylene-vinyl acetate copolymer have been extensively utilized as the materials for conventional solution containers. However, soft polyvinyl chloride poses a health problem to the human body, since a great amount of plasticizer may dissolve into the contained solution. Also, ethylene-vinyl acetate copolymer may dissolve into the contained solution as a result of the deacetation that occurs during its formation, and it does not show any heat-resistance necessary during the autoclave sterilization of the solution.

Therefore, ethylene-vinyl acetate copolymer must be cross-linked by irradiation with, for example, gamma rays in order to obtain the required heat-resistance, which then necessitates an additional process in the production of the containers. In addition to this, the radiation decomposes the ethylene-vinyl acetate copolymer to produce organic substances such as acetone, acetaldehyde, acetic acid, isobutane, n-butane, butadiene, propylene etc., and therefore air ventilation is required to exhaust these organic substances, which also adds an additional process to the production of the containers and makes it difficult to keep the work area safe.

Polyolefin, polyamide, polyurethane etc., being much safer to use and having superior properties, have been considered as alternative materials for containers for medical solutions, especially polyolefin which has been seen as the most appropriate because of its low price. However, it was extremely difficult to produce a desired container for medical solutions with these materials, namely polyolefin, polyamide, polyurethane etc.. As polyolefin,polyamide and polyurethane have a lower dielectric loss than polyvinyl chloride or ethylene-vinyl acetate copolymer, and since high frequency electric fields do not produce enough heat to dissolve the material, therefore these polymers are not suitable for high frequency sealing as used in the case of polyvinyl chloride.

Accordingly, for example, when a container for medical solutions is made from a polyolefin tube which is produced either by inflation forming, or is made of two pieces of polyolefin sheet, the open end of the tube itself or the specified part covered with an additional sheet must be welded by impulse sealing or heat sealing. However, it is difficult to weld complicated structures with impulse sealing, in contrast to high frequency sealing, and also it is difficult to weld materials of different thicknesses on the surface of structures such as pipes, because impulse sealing and heat sealing induce heat into the materials from the outside, thus these ways of sealing make it difficult to form a small port portion at the top end of a container for medical solutions.

On the other hand, blow-molded containers for medical solutions from polyolefin may be considered, in which the small port portion is an integral part of the body portion. However, a container for medical solutions made by this method has a problem in that the contained solution cannot completely be drained, because the material is not soft enough, the body portion is cylindrical, the wall thickness of the body portion is almost uniform, and the wall thickness of the body near the peripheral area in the tail end is greater than that of the center portion. Therefore, a container for medical solutions made by the conventional blow molding method is not suitable for use in a closed system. Thus, no containers for medical solutions definitely suitable for use as containers for infusion fluid or the like have been developed until now using these methods.

The object underlying the invention is to provide a reliable flexible container for medical solutions, e.g. for infusion fluids, from which the solution contained therein can easily and completely be drained, and to provide a method of making such containers.

According to a first embodiment of the invention, the flexible collapsible container is characterized in that the cylindrical port portion is integrally formed with the shoulder portion having an oval cross-section whose minor axis decreases in the collapsed condition with the distance from the port portion in the longitudinal direction of the body portion, and in that the side peripheral area and/or the tail end peripheral area of the container with the bottle-type bag configuration are subsequently heat sealed into a flat engagement.

According to a second embodiment of the invention, the flexible collapsible container is characterized in that the cylindrical port portion is integrally formed with the shoulder portion having an oval cross-section whose minor axis decreases in the collapsed condition with the distance from the port portion in the longitudinal direction of the body portion, and in that the body portion of the container has a central area having a wall thickness greater than that of the side peripheral areas and/or the tail end peripheral area of the body portion.

A further development of the first embodiment according to the invention is characterized in that the body portion of the container has a central area provided with an outwardly protruding portion extending in the longitudinal direction.

A further development of the second embodiment according to the invention is characterized in that the side peripheral areas and/or the tail end peripheral area of the body portion of the container with the bottle-type bag configuration are subsequently heat sealed into a flat engagement.

According to a further development of the container according to the invention the organic polymer is a polyolefin, in particular linear low density polyethylene (LLDPE).

According to a further development of the container according to the invention, the organic polymer is a polymer mixture of 50 to 90 % by weight of linear low density polyethylene (LLDPE) and 10 to 50 % by weight of a block copolymer comprising both-end blocks consisting of styrene units, and a saturated intermediate block consisting of a conjugated diene copolymer unit.

A further development of such a container according to the invention is characterized in that the conjugated diene copolymer unit of the intermediate block is a copolymer of ethylene and butylene or a copolymer of ethylene and isoprene.

According to a further development of the container according to the invention, the organic polymer has a density of 0,91 to 0,93 g/cm$^3$.

According to a further development of the container according to the invention, the organic polymer has an Olsen stiffness which is not greater than 4000 kg/cm$^2$.

According to a further development of the container according to the invention, the wall thickness of the body portion is 0,05 to 0,35 mm, preferably 0,1 to 0,3 mm.

According to a further development of the second embodiment of the container according to the invention, the wall thickness of the central area is 0,2 to 0,3 mm while the wall thickness of the side peripheral areas and/or the tail end peripheral areas is 0,1 to 0,2 mm.

According to a further development of the container according to the invention, the minor axis of the oval cross-section of the shoulder portion is not larger than 30 mm.

According to a further development of the container according to the invention, the inside surface of the container is provided with a laminated layer made of a material which is different from that of the container.

A first embodiment of the method according to the invention of making a flexible collapsible container is characterized by the following steps: The cylindrical port portion is integrally formed with the shoulder portion having an oval cross-section so that its minor axis decreases in the collapsed condition with the distance from the port portion in the longitudinal direction of the body portion; and subsequently the opposite walls of the round side peripheral portions are connected with each other in flat engagement by heat sealing.

A second embodiment of the method according to the invention of making a flexible collapsible container is characterized in that the cylindrical port portion is integrally formed with the shoulder portion having an oval cross-section so that its minor axis decreases in the collapsed condition with the distance from the port portion in the longitudinal direction of the body portion, and in that the central area of the body portion of the container is formed with a wall thickness greater than that of the side peripheral areas and/or the tail end peripheral area of the body portion.

A further development of the method according to the second embodiment is characterized by the additional step of connecting the side peripheral areas of the body portion in flat engagement by heat sealing.

According to a further development,the method according to the invention is characterized by the additional step of connecting the opposite walls of the round tail end peripheral portions of the body portion in flat engagement by heat sealing.

A further development of the method according to the invention is characterized by the additional step of cutting off the undesired outer parts of the side peripheral areas and/or the tail end area after heat sealing.

The container according to the invention has sufficient strength to hold the liquid or medical solution therein, on the one hand, and the flexibility and collapsibility of the materials and components is extremely good, on the other hand. Therefore, the containers according to the invention can definitely be emptied in operation as explained in detail in connection with preferred embodiments. For this purpose, reference is made to the following detailed description of embodiments according to the invention which are explained below with reference to the accompanying drawings, in which

Fig. 1(a)     is a front view of the first embodiment of a container for medical solutions according to this invention.

Fig. 1(b)     is a transverse sectional view taken along line II-II of Fig. 1(a).

Fig. 1(c)     is a top view of the first embodiment of a container for medical solutions according to the invention.

Fig. 2(a)     is a front view of the blow-molded product for making a container for medical solutions according to the invention.

Fig. 2(b)     is a side view of the blow-molded product according to Fig. 2(a).

Figs. 3 and 4     show transverse sectional views in the respective process showing a method of making the blow-molded product.

Fig. 5(a)     is a front view of a second embodiment of a container for medical solutions according to the invention.

Fig. 5(b)     is a transverse sectional view taken along line VIII-VIII of Fig. 5(a).

Fig. 6(a)     is a front view of the improved second embodiment of a container for medical solutions according to the invention.

Fig. 6(b)     is a transverse sectional view taken along line X-X of Fig. 6(a).

Fig. 7     is a sectional side view of the third embodiment of the invention.

Fig. 8     is a figure showing how to use a container for medical solutions according to the invention.

The various embodiments according to the invention will be explained below with reference to the respective figures of the drawings.

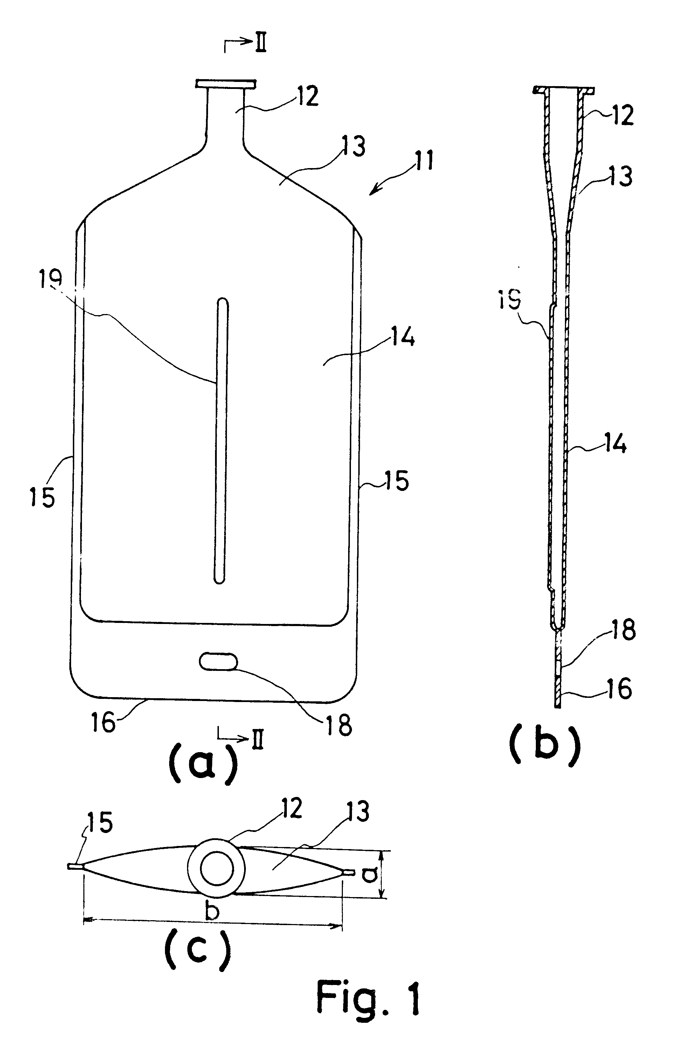

According to the first embodiment shown in Figs. 1(a), 1(b) and 1(c), a container 11 for medical solutions according to the invention made from organic polymers, is a blow-molded product in which a small port portion 12, a shoulder portion 13, and a body portion 14 are formed as an integral part, and side peripheral areas 15 and a tail end peripheral area 16 of the body portion 14 are welded.

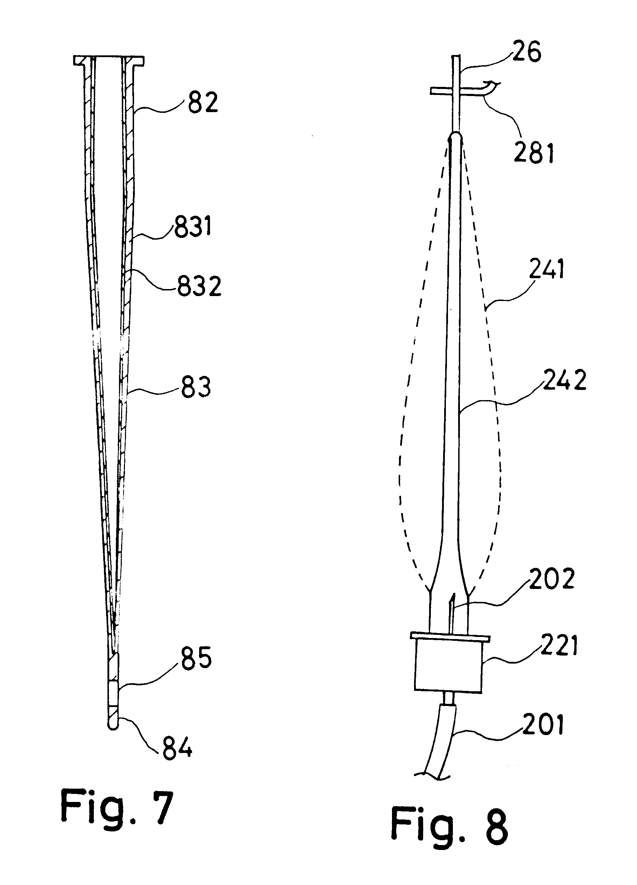

This configuration allows the inside surfaces of the body portion 14 to come into contact with each other as a whole and thus results in a confined space within the container 11 when the solution is not contained or when it has been drained. Therefore, almost no solution remains in the container 11 when such a container 11 as this is used, as shown in Fig. 8. Even though either welding of the side peripheral areas 15 only or the tail end peripheral area 16 only is effective, welding of both the side peripheral areas 15 and the tail end peripheral area 16 is also preferable.

Although many kinds of organic polymers are suitable materials for a container 11 according to the invention, polyolefin is preferable. Polyolefin, suitable for use in the invention, includes low density polyethylene, polypropylene and the like having a flexural elastic module not greater than 4000 kg/cm$^2$. Further preferable polyolefin includes low density polyehtylene having a density of 0,915 to 0,939 g/cm$^3$.

Linear low density polyethylene, LLDPE different from general low density polyethylene is another preferable material. LLDPE is a copolymer of ethylene and α-olefin; α-olefin includes butane-1 of which the carbon number is 4, methylpentane-1 of which the carbon number is 6, octane of which the carbon number is 8, and the like. Another preferred material for the container 11 is LLDPE of which α-olefin is 4 methylpentane-1 and octane-1.

LLDPE in which α-olefin is 4 methylpentane-1 and octane-1, being soft, transparent and durable, is a suitable material for the container 11.

Another suitable material is a polymer mixture of 50 to 90 % by weight of LLDPE and 50 to 10 % by weight of a block copolymer which is comprised of a saturated intermediate block consisting of a conjugated diene copolymer unit, and both-end blocks consisting of styrene units.

The preferable polymer composition of the polymer is such that the LLDPE is between 50 and 90 % by weight and the block copolymer is between 50 and 10 % by weight. If the block copolymer is less than 10 % by weight, it cannot soften, and if greater than 50 % by weight, it makes it difficult to form the container 11, especially using the method of blow molding. Therefore, the most preferable composition is such that the LLDPE is between 60 and 80 % by weight and the block copolymer is between 40 and 20 % by weight.

A minor axis, indicated by the reference sign a in Fig. 1(c) of the oval cross-section of the shoulder portion 13 connected to the small diameter port portion 12 of the container 11 is preferred to be not greater than 30 mm. If the minor axis a of the shoulder portion 13 is over 30 mm, the inside surfaces of the body portion 14 will not quite come into contact with each other after the draining of the contained solution. This results in a relatively large amount of solution remaining in the container 11 which does not drain out and goes to waste, as shown in the following table.

This table shows the remaining solution in the container 11 when the major axis length designated with the reference sign b is respectively 100 mm, 120 mm, 150 mm and when the length of the minor axis a changes from 15 mm to 45 mm. It is readily apparent that the remaining solution increases drastically, independent of the length of the major axis b, when the length of the minor axis a is over 30 mm.

Table

| Amount of remaining solution (ml) depending on the dimensions of the minor axis a and the major axis b. | | | |
|---|---|---|---|
| Length of minor axis a | Length of major axis b | | |
| | 100 mm | 120 mm | 150 mm |
| 15 mm | 15 | 18 | 20 |
| 20 mm | 25 | 30 | 40 |
| 25 mm | 40 | 50 | 60 |
| 30 mm | 60 | 70 | 85 |
| 35 mm | 85 | 100 | 120 |
| 40 mm | 110 | 130 | 160 |
| 45 mm | 140 | 165 | 200 |

The provision of an outwardly protruding portion 19 along the central area of the body portion 14 from the top end of the body portion 14 to the bottom end of the body portion 14 of the container 11 allows the remaining solution to be easily recognized when air is introduced into the space in the protruding portion 19.

All air within the container 11 is confined to the space in the protruding portion 19 after the draining of the solution, hence the air confined to this space cannot escape unless special suction or additional pressure is applied to the container 11. Therefore, even if any air is present in the container 11 containing the respective medical solution, there is no danger of that air leaving the container 11 and entering the human body during normal infusion therapy.

The preferred wall thickness of the container 11 according to this invention is 1 to 4 mm, preferably 1,5 to 3 mm, at the port portion 12, and 0,05 to 0,5 mm, preferably 0,1 to 0,3 mm at the body portion 14. If the wall thickness of the central area of the body portion 14 is less than 0,05 mm, the container 11 will be fragile, thereby becoming unsafe for use as a container 11 for medical solutions. On the other hand, if its thickness is over 0,5 mm, the softness will be lost and the body portion 14 will be too hard to collapse, thus causing a large amount of solution to remain in the container 11.

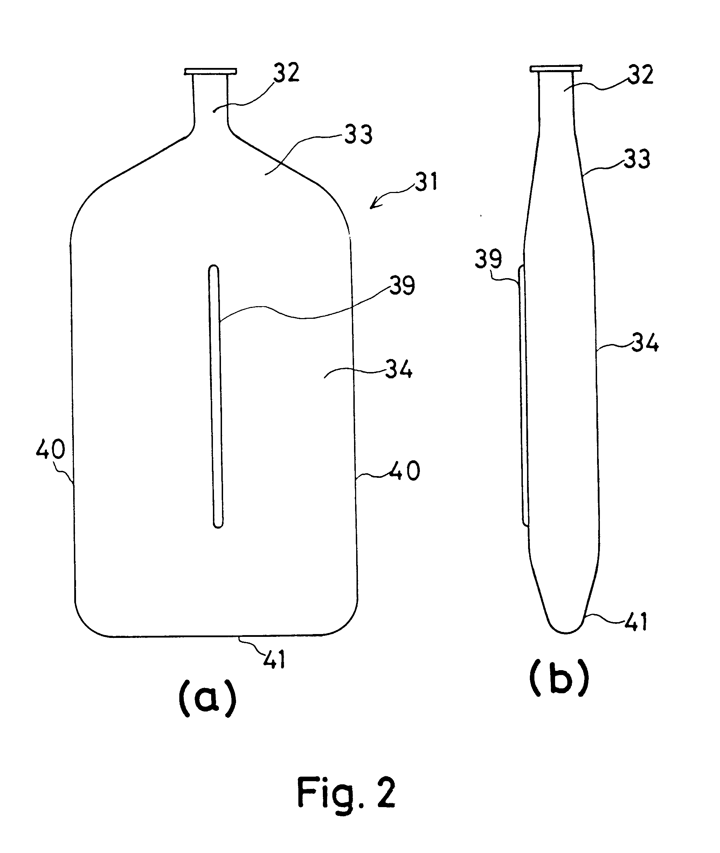

The way of making the container 11 for medical solutions according to this invention, having the aforementioned configuration, will be explained as follows. A blow-molded product 31, made from organic polymer, comprising a body portion 34, a small port portion 32 at the top end of the body portion 34, and a shoulder portion 33, as shown in Figs. 2(a) and 2(b), is produced by blow-molding it as a unit. It is desirable that the body portion 34 is formed as evenly as possible. Due to this configuration, the side peripheral areas 40 and/or the tail end peripheral area 41 of the body portion 34 can easily be heated while the entire body portion 34 of the blow-molded product 31 is flatly collapsed, and also such a container 31 can easily be collapsed as the solution is drained.

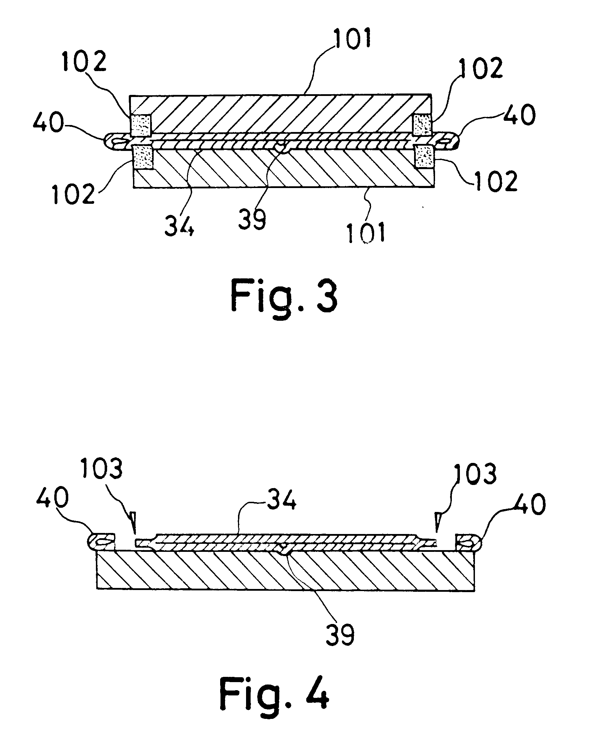

The body portion 34 of the blow-molded product 31, produced in the aforementioned way, is secondly compressed by a compressing apparatus 101 as shown in Fig. 3. Then, a sealer 102 heats and welds the side peripheral areas 40 and/or the tail end peripheral area 41 of the body portion 34 while the body portion 34 is compressed as shown in Fig. 3. In this process, the extra portion of the side peripheral areas 40 and/or the tail end peripheral area 41 of the body portion 34 melt down during heating. Alternatively, as shown in Fig. 4, a cutter 103 cuts off the undesired pare of the side peripheral areas 40 and/or the tail end peripheral area 41 of the body portion 34 after welding thereof, thereby obtaining a completed container 11 for medical solutions. A suitable sealer 102 includes one used for heat sealing, one used for impulse sealing or the like, depending on the material adopted for the container 11.

The tail end area 41 of the body portion 34, not shown in Figs. 3 and 4, is similar to the side peripheral areas 40. The side peripheral areas 15 and the tail end peripheral area 16 of the container 11 obtained in the aforementioned steps, correspond respectively to the side peripheral areas 40 and the tail end peripheral area 41 of the body portion 34 of the blow-molded product 31.

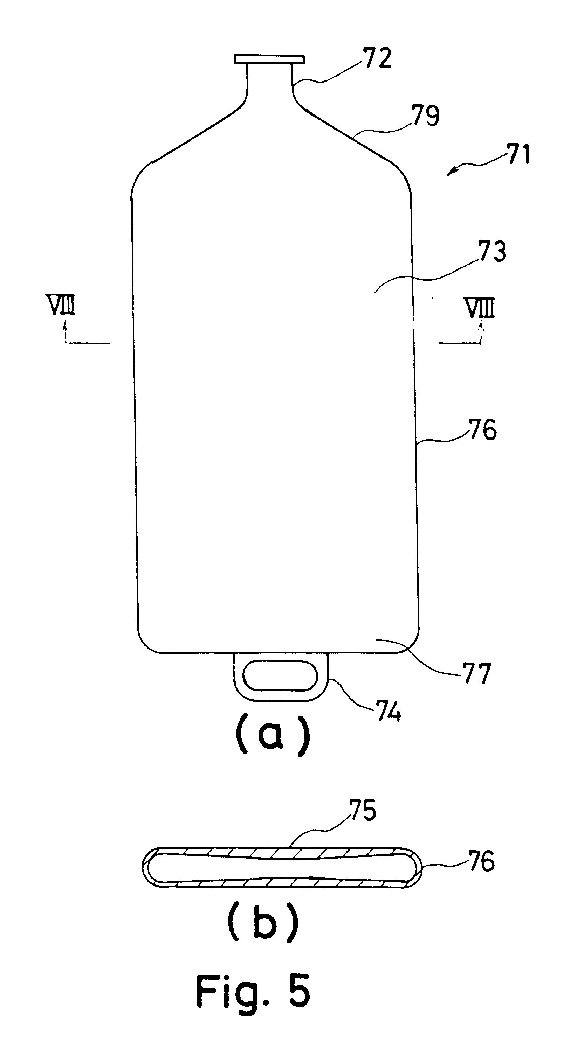

A second embodiment of a container 71 for medical solutions according to the invention is shown in Figs. 5(a) and 5(b). This container 71 is a blow-molded product made from polyolefin, comprising a small port portion 72 at the top end, a body portion 73 adjacent to the port portion 72 and a hanger portion 74 provided at the lower end of the body portion 73. The provision of possible flatness of the body portion 73 and the condition that the minor axis of a shoulder portion 79 of the body portion 73 is not over 30 mm, make the body portion 73 collapsible.

In addition, as the wall thickness of the body portion 73 is thinner at side peripheral areas 76 and/or a tail end peripheral area 77 of the body portion 73 than in its central portion 75, the side peripheral areas 76 and/or the tail end peripheral area 77 become more collapsible, and the inside surfaces of the central portion 75 easily come into contact with each other. Therefore, the container 71 according to the second embodiment, even if the side peripheral areas 76 or the tail end peripheral area 77 are not welded, can still allow much more solution to drain out than the one in the first embodiment.

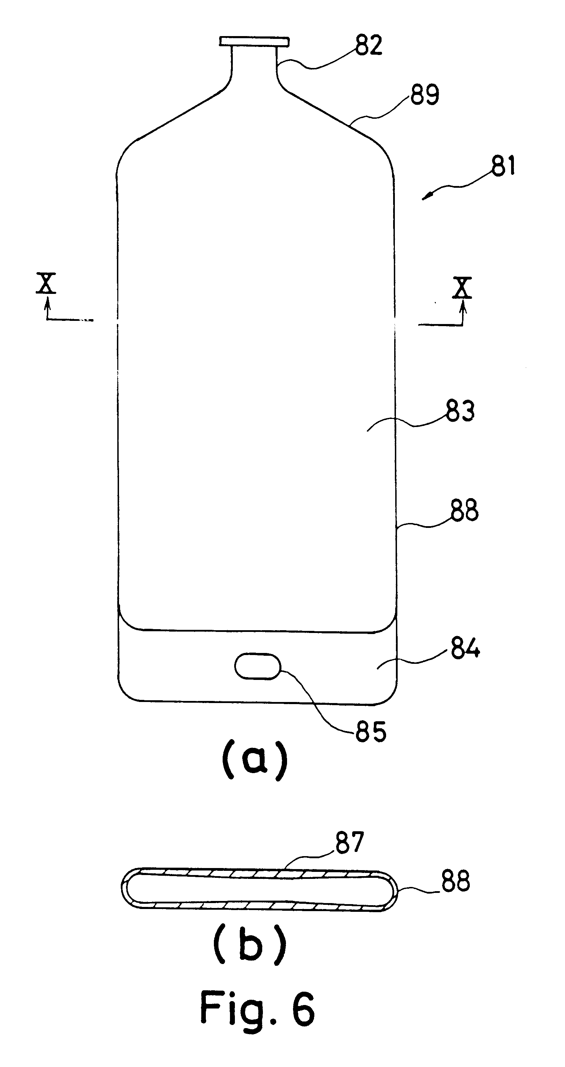

In another preferred container 81, as shown in Figs. 6(a) and 6(b), for an improved second embodiment of a container according to this invention, side peripheral areas 88 and/or a tail end peripheral area 84 are welded, wherein the welded side peripheral areas are not shown in Figs. 6(a) and 6(b), thus decreasing the solution remaining in the container 81 after draining. The material of the containers 71 or 81 of these embodiments is polyolefin having a density of 0,91 to 0,930 g/cm and an Olsen stiffness below 4000 kg/cm$^2$. If polyolefin with a density over 0,930 g/cm$^3$ or an Olsen stiffness over 4000 kg/cm$^2$ is used for the container 71 or 81 for medical solutions, it will become hard and non-collapsible, thus not allowing the solution to drain smoothly. The aforementioned LLDPE is preferable to polyolefin.

The wall thickness in the body portion 73 of the container 71 of this embodiment is 0,05 to 0,35 mm, preferably 0,1 to 0,3 mm. Furthermore, the wall thickness around the central portion 75 is preferred to be 0,2 to 0,3 mm, and the side peripheral areas 76 and/or the tail end peripheral area 77 is preferably thinner than the central portion 75, being 0,1 to 0,2 mm.

Fig. 7 shows a further embodiment of a container for medical solutions according to the invention. Organic polymer, which is different from the material of the container body material 831, is laminated as a layer 832 on the inside wall of the container for medical solutions. The material of the laminated layer 832 includes polyolefin, nylon, polyurethane or the like, which has a composition that does not dissolve at high temperatures. When the container body material 831 of the body portion 83 of the container is made from inexpensive organic polymer such as polyvinyl chloride, the laminated layer 832 prevents any plasticizer in polyvinyl chloride from dissolving into the solution within the container at high-temperatures. Accordingly, this embodiment allows inexpensive organic polymer to be used for the material 831 of the container body 83, and makes it possible to reduce production cost.

Fig. 8 shows the use of the container according to the invention. The container is hung from a hanger 281 by a hanger portion 26, and a needle 202, connected to a solution administration set 201, then is made to penetrate the container through a cap 221. Dotted lines 241 in Fig. 8 show the container filled with a desired(medical) solution. As the solution is allowed to drain out, the container flexes into a flat configuration 242. Therefore, the container according to the invention does not permit the solution to come into contact with the air, unlike a conventional container, and it also allows the solution to almost completely drain out of the container.

Examples of the embodiments according to the invention will be explained as follows.

EXAMPLE 1

A blow-molded product 31 shown in Figs. 2(a) and 2(b) was prepared by blow molding linear low density polyethylene (available under the trade designation "Ultzex" from Mitsui Petrochemical Industries, Ltd. having a density of 0,93 g/cm$^3$ and an Olsen stiffness of 3500 kg/cm$^2$). The wall thickness of the central area of the body portion and the side peripheral areas of the blow-molded product was 250 $\mu$m. The transverse cross-section was oval with a major axis b of 120 mm and a minor axis a of 15 mm.

As shown in Fig. 3, with the side peripheral areas and the tail end peripheral areas of the blow-molded product brought into contact with each other by compressing the blow-molded product, the heat sealer 102 heated and welded these parts together in about 5 seconds, at 150 ° C, under a pressure of 4 kg/cm$^2$.

Then, the undesired portions 40 were cut off, and the container was finished off with the provision of a hanger portion 16.

After the container had been filled with 550 ml water, the port portion of the container was sealed with linear low density polyethylene film, and then a rubber plug was placed over it.

Sterilizing the parenteral solution container for 40 minutes at 115 ° C with autoclaving did not cause any significant deformation.

The measurement of the draining amount versus time with the conventional infusion therapy as shown in Fig. 8 in which a needle 202 was made to penetrate through the port portion, the distance between the port portion and the needle for a human body was 70 cm, and the draining rate of solution was adjusted to about 50 ml/min with a clamp, proved that the draining amount was almost proportional to time. There was only 3 ml of the solution remaining in the container after draining.

However, in the case of a container made from linear low density polyethylene (available under the trade designation "MORETEC" from Idemitsu Petrochemical Co., Ltd. having a density of 0,935 g/cm$^3$ and an Olsen stiffness of 4600 kg/cm$^2$), using the same method as in this example, resulted in the remaining amount of the solution having the much greater value of 60 ml under the same measurement conditions as above.

EXAMPLE 2

A blow-molded product shown in Fig. 5(a) and 5(b) was prepared by blow molding linear density polyethylene (available under the trade designation "MORETEC" from Idemitsu Petrochemical Co., Ltd. having a density of 0,920 g/cm$^3$ and an Olsen stiffness of 2400 kg/cm$^2$). The wall thickness of the central area of the body portion of the blow-molded product was 300 $\mu$m, and that of the side peripheral areas and the tail end peripheral area was 150 $\mu$m. The transverse cross-section was oval with a major axis b of 120 mm and with a minor axis a of 15 mm. This blow-molded product formed a container for medical solution itself without the need for any other processes.

After the container had been filled with 550 ml water, the port portion of the container was sealed with linear low density polyethylene film, and then a rubber plug was placed over it.

Sterilizing the parenteral solution container for 40 minutes at 115 ° C by autoclaving did not cause any significant deformation.

Measurement of the draining amount versus time with the conventional infusion therapy as shown in Fig. 8 in which a needle 202 was made to penetrate through the port portion, the distance between the port portion and the needle for a human body was 70 cm, and the draining rate of the solution was adjusted to about 50 ml/min with a clamp, proved that the draining amount was almost proportional to time. There was only 7 ml of the solution remaining in the container after draining.

However, in the case of a container made from linear low density polyethylene (available under the trade designation "MORETEC" from Idemitsu Petrochemical Co., Ltd. having a density of 0,935 g/cm$^3$ and an Olsen stiffness of 4600 kg/cm$^2$), using the same method as in this example, resulted in the remaining amount of the solution having the much greater value of 60 ml under the same measurement conditions as above.

EXAMPLE 3

A blow-molded product shown in Figs. 5(a) and 5(b) was prepared by blow molding linear low density polyethylene (available under the trade designation "MORETEC" from Idemitsu Petrochemical Industries, Ltd. having a density of 0,92 g/cm$^3$ and an Olsen stiffness of 2400 kg/cm$^2$). The wall thickness of the central area of the body portion was 250 μm, and that of the side peripheral areas and the tail end peripheral area of the blow-molded product was 150 μm. The transverse cross-section was oval with a major axis b of 120 mm and with a minor axis a of 15 mm.

As shown in Fig. 3, with the side peripheral areas and the tail end peripheral area of the blow-molded product being brought into contact with each other by the compression of the blow-molded product, the heat sealer 102 heated and welded these parts together in about 5 seconds, at a temperature of 150 °C and under a pressure of 4 kg/cm². Then the undesired portions were cut off, and the container for medical solutions was finished off with the provision of a suitable hanger portion.

After the container had been filled with 550 ml water, the port portion of the container was sealed with linear low density polyethylene film, and then a rubber plug was placed over it.

Sterilizing the parenteral solution container for 40 minutes at 115 °C with autoclaving did not cause any significant deformation.

Measurement of the draining amount versus time with the conventional infusion therapy as shown in Fig. 8 in which a needle 202 was made to penetrate through the port portion, the distance between the port portion and the needle for a human body was 70 cm, and the draining rate of the solution was adjusted to about 50 ml/min with a clamp, proved that the draining amount was almost proportional to time. There was only 5 ml of the solution remaining in the container after draining.

However, in the case of a container made from linear low density polyethylene (available under the trade designation "MORETEC" from Idemitsu Petrochemical Co., Ltd. with a density of 0,935 g/cm³ and an Olsen stiffness of 4600 kg/cm²), using the same method as in this example, resulted in the remaining amount of the solution having a much greater value of 55 ml under the same measurement condition as above.

As described above, the container for medical solutions according to this invention is suitable for a parenteral solution bag for a closed system because of its high-temperature resistance which enables it to withstand autoclave sterilization, its superior transparency, its highly reliable safety for the human body, and its easiness of draining the solution.

**Claims**

1. A flexible collapsible container (11) for medical solutions, composed of flexible, inert organic polymer material, comprising a hollow body portion (14) the outer edges of which are connected with each other, a hanger portion (18) at the tail end (16) of the body portion (14), a shoulder portion (13) and a port portion (12) at the top end of the body portion (14), wherein the body portion (14), the shoulder portion (13) and the port portion (12) of the container (11) are integrally formed in a bottle-type bag configuration by blow molding, characterized
   - in that the cylindrical port portion (12) is integrally formed with the shoulder portion (13) having an oval cross-section whose minor axis (a) decreases in the collapsed condition with the distance from the port portion (12) in the longitudinal direction of the body portion (14),
   - and in that the side peripheral area (15) and/or the tail end peripheral area (16) of the container (11) with the bottle-type bag configuration are subsequently heat sealed into a flat engagement.

2. A flexible collapsible container (71, 81) for medical solutions, composed of flexible, inert organic polymer material, comprising a hollow body portion (73, 83) the outer edges of which are connected with each other, a hanger portion (74, 85) at the tail end of the body portion (73, 83), a shoulder portion (79, 89) and a port portion (72, 82) at the top end of the body portion (73, 83), wherein the body portion (73, 83), the shoulder portion (79, 89) and the port portion (72, 82) are integrally formed in a bottle-type bag configuration by blow molding, characterized
   - in that the cylindrical port portion (72, 82) is integrally formed with the shoulder portion (79, 89) having an oval cross-section whose minor axis (a) decreases in the collapsed condition with the distance from the port portion (72, 82) in the longitudinal direction of the body portion (73, 83),
   - and in that the body portion (73, 83) of the container (71, 81) has a central area (75, 87) having a wall thickness greater than that of the side peripheral areas (76, 88) and/or the tail end peripheral area (77, 84) of the body portion (73, 83).

3. The container according to claim 1, characterized

EP 0 229 184 B1

- in that the body portion (14) of the container (11) has a central area provided with an outwardly protruding portion (19) extending in the longitudinal direction.

4. The container according to claim 2,
characterized
in that the side peripheral areas (88) and/or the tail end peripheral area (84) of the body portion (83) of the container (81) with the bottle-type bag configuration are subsequently heat sealed into a flat engagement.

5. The container according to any of claims 1 to 4,
characterized in that the organic polymer is a polyolefin, in particular linear low density polyethylene (LLDPE).

6. The container according to any of claims 1 to 5,
characterized in that the organic polymer is a polymer mixture of 50 to 90% by weight of linear low density polyethylene (LLDPE) and 10 to 50 % by weight of a block copolymer comprising both-end blocks consisting of styrene units, and a saturated intermediate block consisting of a conjugated diene copolymer unit.

7. The container according to claim 6,
characterized in that the conjugated diene copolymer unit of the intermediate block is a copolymer of ethylene and buthylene or a copolymer of ethylene and isoprene.

8. The container according to any of claims 1 to 7,
characterized in that the organic polymer has a density of 0,91 to 0,93 g/cm$^3$.

9. The container according to any of claims 1 to 8,
characterized in that the organic polymer has an Olsen stiffness which is not greater than 4000 kg/cm$^2$.

10. The container according to any of claims 1 to 9,
characterized in that the wall thickness of the body portion is 0,05 to 0,35 mm, preferably 0,1 to 0,3 mm.

11. The container according to any of claims 2 to 10,
characterized in that the wall thickness of the central area (75, 87) is 0,2 to 0,3 mm while the wall thickness of the side peripheral areas (76, 88) and/or the tail end peripheral areas (77, 84) is 0,1 to 0,2 mm.

12. The container according to any of claims 1 to 11,
characterized in that the minor axis (a) of the oval cross-section of the shoulder portion is not larger than 30 mm.

13. The container according to any of claims 1 to 12,
characterized in that the inside surface of the container is provided with a laminated layer (832) made of a material which is different from that of the container.

14. A method of making a flexible collapsible container (11) for medical solutions, composed of flexible, inert organic polymer material, comprising a hollow body portion (14), the outer edges of which are connected with each other, a hanger portion (18) at the tail end (16) of the body portion (14), and a port portion (12) at the top end of the container (11),
wherein the organic polymer material is blow molded into a bottle-type integral bag configuration (31) including a port portion (32), a shoulder portion (33) and a main body portion (34) having round side peripheral portions (40) and a round tail end peripheral portion (41),
characterized by the following steps:
- the cylindrical port portion (32) is integrally formed with the shoulder portion (33) having an oval cross-section so that its minor axis (a) decreases in the collapsed condition with the distance from the port portion (32) in the longitudinal direction of the body portion (34), and
- subsequently the opposite walls of the round side peripheral portions (40) are connected with

9

each other in flat engagement by heat sealing.

15. A method of making a flexible collapsible container (71, 81) for medical solutions, composed of flexible, inert organic polymer material, comprising a hollow body portion (73, 83) the outer edges of which are connected with each other, a hanger portion (74, 85) at the tail end of the body portion (73, 83) and a port portion (72, 82) at the top end of the container (71, 81),
wherein the organic polymer material is blow molded into a bottle-type integral bag configuration (71, 81) including a port portion (72, 82), a shoulder portion (79, 89) and a main body portion (73, 83) having round side peripheral portions and a round tail end peripheral portion,
characterized
in that the cylindrical port portion (72, 82) is integrally formed with the shoulder portion (79, 89) having an oval cross-section so that its minor axis (a) decreases in the collapsed condition with the distance from the port portion (72, 82) in the longitudinal direction of the body portion (73, 83),
- and in that the central area (75, 87) of the body portion (73, 83) of the container (71, 81) is formed with a wall thickness greater than that of the side peripheral areas (76, 88) and/or the tail end peripheral area (77, 84) of the body portion (73, 83).

16. The method according to claim 15,
characterized by the additional step of connecting the side peripheral areas (76, 88) of the body portion (73, 83) in flat engagement by heat sealing.

17. The method according to any of claims 14 to 16,
characterized by the additional step of connecting the opposite walls of the round tail end peripheral portions (77, 88) of the body portion (73, 83) in flat engagement by heat sealing.

18. The method according to any of claims 14 to 17,
characterized by the additional step of cutting off the undesired outer parts of the side peripheral areas (40) and/or the tail end area (41) after heat sealing.

**Patentansprüche**

1. Flexibler zusammenlegbarer Behälter (11) für medizinische Lösungen, bestehend aus flexiblem inertem organischem Polymermaterial, der aufweist: einen hohlen Körperbereich (14), dessen äußere Ränder miteinander verbunden sind, einen Aufhängebereich (18) am Fußende (16) des Körperbereichs (14), einen Schulterbereich (13) und einen Öffnungsbereich (12) am Oberende des Körperbereichs (14), wobei der Körperbereich (14), der Schulterbereich (13) und der Öffnungsbereich (12) des Behälters (11) integral durch Blasformen zu einer flaschenartigen Beutelkonfiguration geformt sind,
**dadurch gekennzeichnet,**
- daß der zylindrische Öffnungsbereich (12) integral mit dem Schulterbereich (13) geformt ist, der ovalen Querschnitt hat, dessen kleinere Achse (a) im kollabierten Zustand mit der Entfernung vom Öffnungsbereich (12) in Längsrichtung des Körperbereichs (14) abnimmt,
- und daß der seitliche Randbereich (15) und/oder der Fußende-Randbereich (16) des Behälters (11) mit der flaschenartigen Beutelkonfiguration anschließend in einem flachen Eingriff miteinander thermoverschweißt sind.

2. Flexibler zusammenlegbarer Behälter (71, 81) für medizinische Lösungen, bestehend aus flexiblem inertem organischem Polymermaterial, der aufweist: einen hohlen Körperbereich (73, 83), dessen äußere Ränder miteinander verbunden sind, einen Aufhängebereich (74, 85) am Fußende des Körperbereichs (73, 83), einen Schulterbereich (79, 89) und einen Öffnungsbereich (72, 82) am Oberende des Körperbereichs (73, 83), wobei der Körperbereich (73, 83), der Schulterbereich (79, 89) und der Öffnungsbereich (72, 82) integral durch Blasformen zu einer flaschenartigen Beutelkonfiguration geformt sind,
**dadurch gekennzeichnet,**
- daß der zylindrische Öffnungsbereich (72, 82) integral mit dem Schulterbereich (79, 89) geformt ist, der ovalen Querschnitt hat, dessen kleinere Achse (a) im kollabierten Zustand mit der Entfernung von dem Öffnungsbereich (72, 82) in Längsrichtung des Körperbereichs (73, 83) abnimmt,
- und daß der Körperbereich (73, 83) des Behälters (71, 81) einen zentralen Bereich (75, 87) hat, dessen Wanddicke größer als die der seitlichen Randbereiche (76, 88) und/oder des Fußende-Randbereichs (77, 84) des Körperbereichs (73, 83) ist.

3. Behälter nach Anspruch 1,
**dadurch gekennzeichnet,**
- daß der Körperbereich (14) des Behälters (11) einen zentralen Bereich hat, der mit einem in Längsrichtung verlaufenden, nach außen vorspringenden Bereich (19) versehen ist.

4. Behälter nach Anspruch 2,
**dadurch gekennzeichnet,**
daß die seitlichen Randbereiche (88) und/oder der Fußende-Randbereich (84) des Körperbereichs (83) des Behälters (81) mit der flaschenartigen Beutelkonfiguration anschließend in einem flachen Eingriff miteinander thermoverschweißt sind.

5. Behälter nach einem der Ansprüche 1-4,
**dadurch gekennzeichnet,**
daß das organische Polymer ein Polyolefin, insbesondere lineares Polyethylen niedriger Dichte (LLDPE) ist.

6. Behälter nach einem der Ansprüche 1-5,
**dadurch gekennzeichnet,**
daß das organische Polymer ein Polymergemisch von 50-90 Gew.-% von linearem Polyethylen niedriger Dichte (LLDPE) und 10-50 Gew.-% eines Blockcopolymers ist, das beidendig Blöcke, die aus Styroleinheiten bestehen, und einen gesättigten Zwischenblock, der aus einer konjugierten Dien-Copolymereinheit besteht, aufweist.

7. Behälter nach Anspruch 6,
**dadurch gekennzeichnet,**
daß die konjugierte Dien-Copolymereinheit des Zwischenblocks ein Copolymer von Ethylen und Butylen oder ein Copolymer von Ethylen und Isopren ist.

8. Behälter nach einem der Ansprüche 1-7,
**dadurch gekennzeichnet,**
daß das organische Polymer eine Dichte von 0,91-0,93 g/cm$^3$ hat.

9. Behälter nach einem der Ansprüche 1-8,
**dadurch gekennzeichnet,**
daß das organische Polymer eine Olsen-Steifheit von nicht mehr als 4000 kg/cm$^2$ hat.

10. Behälter nach einem der Ansprüche 1-9,
**dadurch gekennzeichnet,**
daß die Wandstärke des Körperbereichs 0,05-0,35 mm, vorzugsweise 0,1-0,3 mm ist.

11. Behälter nach einem der Ansprüche 2-10,
**dadurch gekennzeichnet,**
daß die Wandstärke des zentralen Bereichs (75, 87) 0,2-0,3 mm ist, während die Wandstärke der seitlichen Randbereiche (76, 88) und/oder des Fußende-Randbereichs (77, 84) 0,1-0,2 mm ist.

12. Behälter nach einem der Ansprüche 1-11,
**dadurch gekennzeichnet,**
daß die kleinere Achse (a) des ovalen Querschnitts des Schulterbereichs nicht größer als 30 mm ist.

13. Behälter nach einem der Ansprüche 1-12,
**dadurch gekennzeichnet,**
daß die Innenfläche des Behälters mit einer auflaminierten Schicht (832) aus einem Material versehen ist, das von demjenigen des Behälters verschieden ist.

14. Verfahren zur Herstellung eines flexiblen zusammenlegbaren Behälters (11) für medizinische Lösungen,

EP 0 229 184 B1

bestehend aus flexiblem inertem organischem Polymermaterial, der einen hohlen Körperbereich (14), dessen Außenränder miteinander verbunden sind, einen Aufhängebereich (18) am Fußende (16) des Körperbereichs (14) und einen Öffnungsbereich (12) am Oberende des Behälters (11) aufweist,

wobei das organische Polymermaterial zu einer flaschenartigen integralen Beutelkonfiguration (31) blasgeformt wird, die einen Öffnungsbereich (32), einen Schulterbereich (33) und einen Hauptkörperbereich (34) mit runden seitlichen Randbereichen (40) und einem runden Fußende-Randbereich (41) aufweist,

**gekennzeichnet durch**

die folgenden Schritte:

- der zylindrische Öffnungsbereich (32) wird integral mit dem Schulterbereich (33) geformt, der ovalen Querschnitt hat, so daß seine kleinere Achse (a) im kollabierten Zustand mit der Entfernung von dem Öffnungsbereich (32) in Längsrichtung des Körperbereichs (34) abnimmt, und

- anschließend werden die gegenüberliegenden Wände der runden seitlichen Randbereiche (40) in einem flachen Eingriff miteinander durch Thermoschweißen miteinander verbunden.

**15.** Verfahren zur Herstellung eines flexiblen zusammenlegbaren Behälters (71, 81) für medizinische Lösungen, bestehend aus flexiblem inertem organischem Polymermaterial, der einen hohlen Körperbereich (73, 83), dessen äußere Ränder miteinander verbunden sind, einen Aufhängebereich (74, 85) am Fußende des Körperbereichs (73, 83) und einen Öffnungsbereich (72, 82) am Oberende des Behälters (71, 81) aufweist,

wobei das organische Polymermaterial zu einer flaschenartigen integralen Beutelkonfiguration (71, 81) blasgeformt wird, die einen Öffnungsbereich (72, 82), einen Schulterbereich (79, 89) und einen Hauptkörperbereich (73, 83) mit runden seitlichen Randbereichen und einem runden Fußende-Randbereich aufweist,

**dadurch gekennzeichnet,**

- daß der zylindrische Öffnungsbereich (72, 82) integral mit dem Schulterbereich (79, 89) geformt wird, der einen ovalen Querschnitt hat, so daß seine kleinere Achse (a) im kollabierten Zustand mit der Entfernung von dem Öffnungsbereich (72, 82) in Längsrichtung des Körperbereichs (73, 83) abnimmt, und

- daß der zentrale Bereich (75, 87) des Körperbereichs (73, 83) des Behälters (71, 81) mit einer Wandstärke geformt wird, die größer als diejenige der seitlichen Randbereiche (76, 88) und/oder des Fußende-Randbereichs (77, 84) des Körperbereichs (73, 83) ist.

**16.** Verfahren nach Anspruch 15,

**gekennzeichnet durch**

den zusätzlichen Schritt des Verbindens der seitlichen Randbereiche (76, 88) des Körperbereichs (73, 83) in einem flachen Eingriff miteinander durch Thermoschweißen.

**17.** Verfahren nach einem der Ansprüche 14-16,

**gekennzeichnet durch**

den zusätzlichen Schritt des Verbindens der gegenüberliegenden Wände der runden Fußende-Randbereiche (77, 88) des Körperbereichs (73, 83) in einem flachen Eingriff miteinander durch Thermoschweißen.

**18.** Verfahren nach einem der Ansprüche 14-17,

**gekennzeichnet durch**

den zusätzlichen Schritt des Abschneidens der unerwünschten äußeren Teile der seitlichen Randbereiche (40) und/oder des Fußende-Randbereichs (41) nach dem Thermoschweißen.

**Revendications**

**1.** Récipient souple pouvant s'aplatir (11) pour solutions médicales, constitué par une matière polymère inorganique inerte flexible, comportant une portion de corps creux (14) dont les bords extérieurs sont raccordés l'un à l'autre, une portion de suspension (18) au niveau de l'extrémité postérieure (16) de la portion de corps (14), une portion d'épaule (13) et une portion d'embouchure (12) au niveau de l'extrémité supérieure de la portion de corps (14), dans lequel la portion de corps (14), la portion d'épaule (13) et la portion d'embouchure (12) du récipient (11) sont formées d'un seul tenant à la forme

12

EP 0 229 184 B1

d'une poche de type bouteille par moulage par soufflage, caractérisé en ce que :

- la portion d'embouchure cylindrique (12) est formée d'un seul tenant avec la portion d'épaule (13) ayant une section transversale ovale dont le petit axe (a) diminue à l'état aplati en fonction de la distance à la portion d'embouchure (12) dans la direction longitudinale de la portion de corps (14), et
- les zones périphériques latérales (15) et/ou la zone périphérique terminale postérieure (16) du récipient (11) ayant la forme d'une poche de type bouteille sont ensuite soudées thermiquement en coopération à plat.

2. Récipient souple pouvant s'aplatir (71,81) pour solutions médicales, constitué par une matière polymère organique inerte souple, comprenant une portion de corps creux (73,83) dont les bords extérieurs sont raccordés l'un à l'autre, une portion de suspension (74,85) au niveau de l'extrémité postérieure de la portion de corps (73,83), une portion d'épaule (79,89) et une portion d'embouchure (72,82) au niveau de l'extrémité supérieure de la portion de corps (73,83), dans lequel la portion de corps (73,83), la portion d'épaule (79,89) et la portion d'embouchure (72,82) sont formées d'un seul tenant à la configuration d'une poche de type bouteille par moulage par soufflage, caractérisé en ce que :

- la portion d'embouchure cylindrique (72,82) est formée d'un seul tenant avec la portion d'épaule (79,89) ayant une section transversale ovale dont le petit axe (a) diminue, à l'état aplati, en fonction de la distance à la portion d'embouchure (72,82) dans la direction longitudinale de la portion de corps (73,83), et
- la portion de corps (73,83) du récipient (71,81) a une zone centrale (75,87) ayant une épaisseur de paroi supérieure à celle des zones périphériques latérales (76,88) et/ou de la zone périphérique terminale postérieure (77,84) de la portion de corps (73,83).

3. Récipient selon la revendication 1, caractérisé en ce que la portion de corps (14) du récipient (11) a une zone centrale comprenant une portion saillant extérieurement (19) s'étendant dans la direction longitudinale.

4. Récipient selon la revendication 2, caractérisé en ce que les zones périphériques latérales (88) et/ou la zone périphérique terminale postérieure (84) de la portion de corps (83) du récipient (81) ayant la forme d'une poche de type bouteille sont ensuite soudées thermiquement en coopération à plat.

5. Récipient selon l'une des revendications 1 à 4, caractérisé en ce que le polymère organique est une polyoléfine, notamment un polyéthylène linéaire basse densité (LLDPE).

6. Récipient selon l'une des revendications 1 à 5, caractérisé en ce que le polymère organique est un mélange de polymères contenant 50 à 90% en poids d'un polyéthylène linéaire basse densité (LLDPE) et 10 à 50% en poids d'un copolymère séquencé comprenant deux blocs terminaux constitués par des unités styrène et un bloc intermédiaire saturé consistant en une unité copolymère de diènes conjugués.

7. Récipient selon la revendication 6, caractérisé en ce que l'unité copolymère de diènes conjugués du bloc intermédiaire est un copolymère d'éthylène et de butylène ou un copolymère d'éthylène et d'isoprène.

8. Récipient selon l'une des revendications 1 à 7, caractérisé en ce que le polymère organique a une densité de 0,91 à 0,93 g/cm3.

9. Récipient selon l'une des revendications 1 à 8, caractérisé en ce que le polymère organique a une rigidité Olsen non supérieure à 4000 kg/cm2.

10. Récipient selon l'une des revendications 1 à 9, caractérisé en ce que l'épaisseur de paroi de la portion de corps est 0,05 à 0,35 mm, et de préférence 0,1 à 0,3 mm.

11. Récipient selon l'une des revendications 2 à 10, caractérisé en ce que l'épaisseur de paroi de la portion centrale (75,87) est 0,2 à 0,3 mm, tandis que l'épaisseur de paroi des zones périphériques latérales (76,88) et/ou des zones périphériques terminales postérieures (77,84) est 0,1 à 0,2 mm.

12. Récipient selon l'une des revendications 1 à 11, caractérisé en ce que le petit axe (a) de la section

13

**EP 0 229 184 B1**

transversale ovale de la portion d'épaule est inférieur à 30 mm.

13. Récipient selon l'une des revendications 1 à 12, caractérisé en ce que la surface intérieure du récipient est revêtue d'une couche stratifiée (832) en un matériau qui diffère de celui du récipient.

14. Procédé pour fabriquer un récipient souple pouvant s'aplatir (11) pour solutions médicales, constitué par un matériau polymère organique inerte souple, comprenant une portion de corps creux (14) dont les bords extérieurs sont raccordés l'un à l'autre, une portion de suspension (18) à l'extrémité postérieure (16) de la portion de corps (14) et une portion d'embouchure (12) à l'extrémité supérieure du récipient (11), dans lequel le matériau polymère organique est moulé par soufflage à la forme d'une poche d'un seul tenant de type bouteille (31) comprenant une portion d'embouchure (32), une portion d'épaule (33) et une portion de corps principal (34) ayant des portions périphériques latérales arrondies (40) et une portion périphérique terminale postérieure arrondie (41), caractérisé par les stades suivants :
    - la portion d'embouchure cylindrique (32) est formée d'un seul tenant avec la portion d'épaule (33) ayant une section transversale ovale telle que son petit axe (a) diminue, à l'état aplati, en fonction de la distance à la portion d'embouchure (32) dans la direction longitudinale de la portion de corps (34), et
    - les parois opposées des portions périphériques latérales arrondies (40) sont ensuite raccordées l'une à l'autre en coopération à plat par soudage thermique.

15. Procédé pour fabriquer un récipient souple pouvant s'aplatir (71,81) pour solutions médicales, constitué dans un matériau polymère organique inerte souple, comprenant une portion de corps creux (73,83) dont les bords extérieurs sont raccordés l'un à l'autre, une portion de suspension (74,85) au niveau de l'extrémité postérieure de la portion de corps (73,83) et une portion d'embouchure (72,82) au niveau de l'extrémité supérieure du récipient (71,81), dans lequel le matériau polymère organique est moulé par soufflage à la forme d'une poche d'un seul tenant de type bouteille (71,81) comportant une portion d'embouchure (72,82), une portion d'épaule (79,89) et une portion de corps principal (73,83) ayant des portions périphériques latérales arrondies et une portion périphérique terminale postérieure arrondie, caractérisé en ce que :
    - la portion d'embouchure cylindrique (72,82) est formée d'un seul tenant avec la portion d'épaule (79,89) ayant une section transversale ovale telle que son petit axe (a) diminue, à l'état aplati, en fonction de la distance à la portion d'embouchure (72,82) dans la direction longitudinale de la portion de corps (73,83), et
    - la zone centrale (75,87) de la portion de corps (73,83) du récipient (71,81) est formée avec une épaisseur de paroi supérieure à celle des zones périphériques latérales (76,88) et/ou de la zone périphérique terminale postérieure (77,84) de la portion de corps (73,83).

16. Procédé selon la revendication 15, caractérisé par le stade additionnel dans lequel on relie les zones périphériques latérales (76,88) de la portion de corps (73,83) en coopération à plat par soudage thermique.

17. Procédé selon l'une des revendications 14 à 16, caractérisé par le stade additionnel dans lequel on relie les parois opposées des portions périphériques terminales postérieures arrondies (77,84) de la portion de corps (73,83), en coopération à plat, par soudage thermique.

18. Procédé selon l'une des revendications 14 à 17, caractérisé par le stade additionnel dans lequel on coupe et on sépare les parties extérieures non désirées des zones périphériques latérales (40) et/ou de la zone terminale postérieure (41) après le soudage thermique.

**Fig. 1**

Fig. 2

Fig. 3

Fig. 4

(a)

(b)

Fig. 5

(a)

(b)

Fig. 6

Fig. 7

Fig. 8